# EUROPÄISCHE PATENTSCHRIFT

(11) **EP 3 782 384 B1**
(45) Veröffentlichungstag und Bekanntmachung des Hinweises auf die Patenterteilung: **29.09.2021**
(21) Anmeldenummer: 19702818.6
(22) Anmeldetag: 22.01.2019
(51) Int. Cl.: H04W 4/40, H04W 52/02, H04L 12/12, H04W 12/06, B60R 25/00, B60W 40/08, H04L 29/08, H04W 4/02, B60Q 1/24, H04W 12/02

(54) **VERFAHREN, KOMMUNIKATIONSMODUL, FAHRZEUG, SYSTEM UND COMPUTERPROGRAMM ZUR AUTHENTIFIZIERUNG EINES MOBILFUNKGERÄTES FÜR EINE STANDORTSPEZIFISCHE FUNKTION EINES FAHRZEUGS**
METHOD, COMMUNICATION MODULE, VEHICLE, SYSTEM, AND COMPUTER PROGRAM FOR AUTHENTICATING A MOBILE RADIO DEVICE FOR A LOCATION-SPECIFIC FUNCTION OF A VEHICLE
PROCÉDÉ, MODULE DE COMMUNICATION, VÉHICULE, SYSTÈME ET PROGRAMME INFORMATIQUE PERMETTANT D'AUTHENTIFIER UN APPAREIL RADIO MOBILE POUR UNE FONCTION SPÉCIFIQUE AU SITE D'UN VÉHICULE

(30) Priorität: 20.04.2018 DE 102018206070
(43) Veröffentlichungstag der Anmeldung: 24.02.2021
(73) Patentinhaber: Audi AG, 85045 Ingolstadt (DE)
(72) Erfinder: PLECHINGER, Jörg, 80469 München (DE); VOIGT, Christoph, 85092 Kösching (DE)
(86) Internationale Anmeldenummer: PCT/EP2019/051440
(87) Internationale Veröffentlichungsnummer: WO 2019/201485

(56) Entgegenhaltungen:
- EP-A2- 3 276 991
- WO-A1-2015/122825
- DE-A1- 10 253 915
- DE-A1-102016 000 546

## Beschreibung

### Technisches Gebiet

Ausführungsbeispiele beziehen sich auf Verfahren, Kommunikationsmodul, Fahrzeug, System und Computerprogramm zur Authentifizierung eines Mobilfunkgerätes für eine standortspezifische Funktion eines Fahrzeugs. Dabei werden standortspezifische Funktionen des Fahrzeugs eingesetzt, um den Fahrer vor Erreichen oder nach Verlassen des Fahrzeugs die Bedienung durch unterstützende Fahrzeugreaktionen zu erleichtern.

### Hintergrund

Es ist bekannt, dem Fahrer die Fern-Bedienung und Handhabung eines Fahrzeugs vor Erreichen oder nach Verlassen des Fahrzeugs durch unterstützende Fahrzeugreaktionen zu erleichtern. Dazu werden in den Fahrzeugen Steuergeräte eingesetzt, die die Annäherung oder das Entfernen des Fahrers registrieren. Diese Steuergeräte müssen stromverbrauchsoptimiert sein, da sie wegen der Unvorhersehbarkeit einer Annäherung des Fahrers zumindest semipermanent in Betrieb sein müssen. Die Bedienung dieser Steuergeräte erfolgt mit Funk-Sendeempfängern, die als Kraftfahrzeugschlüssel ausgebildet sein können oder vielfältige andere Ausführungsformen annehmen können. So kann ein Funk-Sendeempfänger auch als handelsübliches zellulares Mobilfunkgerät ausgebildet sein, auf dem eine herstellerspezifische Applikation ausgeführt wird.

Realisierungen können zum Beispiel auf der Bluetooth Niedrigenergie (Low Energy) Technologie basieren. Es können andere Funkstandards mit begrenzter Reichweite zum Einsatz kommen, die zum Beispiel gemäß WLAN (Wireless LAN), WiFi oder NFC (Near Field Communication) Standard ausgebildet sein können. Weiter kann auch der etablierte zellulare Mobilfunk mit seinen handelsüblichen Mobilgeräten zum Einsatz kommen.

Aus der DE 10 2016 108 726 A1 sind erste und zweite Bewegungsdaten bekannt, die die Bewegung einer ersten und einer zweiten anziehbaren tragbaren Vorrichtung während eines ersten Zeitraums repräsentieren. Die erste und die zweite anziehbare tragbare Vorrichtung sind jeweils mit einem ersten und einem zweiten Benutzer assoziiert. Zumindest teilweise basierend auf dem Vergleich der Bewegungsdaten wird eine Position des ersten Benutzers relativ zu dem zweiten Benutzer in dem Fahrzeug bestimmt.

Aus der DE 10 2013 225 742 A1 ist ein drahtloses Kommunikationsgerät (oder Endgerät) bekannt, ein Fahrzeug mit einem Zentralmodul und einen einen Schlüssel bereitstellenden Server. Der den Schlüssel bereitstellende Server ist kommunikativ mit dem drahtlosen Kommunikationsgerät und dem Zentralmodul über drahtlose Verbindungen gekoppelt.

Aus der DE 10 2017 110 251 A1 ist ein System zur Implementierung in einem autonomen Fahrzeug bekannt, das eine hardwarebasierte Verarbeitungseinheit, eine Mensch-Maschine-Schnittstelle und eine nicht vorübergehende Speichervorrichtung, die ein Registrierungsmodul enthält, umfasst. Wenn es von der hardwarebasierten Verarbeitungseinheit ausgeführt wird, führt das System Fahrgastregistrierungsfunktionen aus.

Aus der EP 2 729 904 B1 ist bekannt, dass eine Personalisierung von Daten und infolgedessen von Einstellungen in einem Kraftfahrzeug erfolgt mithilfe einer zentralen Datenverarbeitungseinrichtung. Diese kennt die Positionen eines Kraftfahrzeugs oder mehrerer Kraftfahrzeuge und übermittelt diese Positionen an ein mobiles Kommunikationsgerät, das die übermittelten Positionen mit seiner eigenen vergleicht.

DE 10 2016 000 546 A1 lehrt Verfahren und Vorrichtungen zum Bereitstellen eines Zugriffs auf einen Satz von Funktionen in einem Mehrpersonenfahrzeug für einen Benutzer einer mobilen Vorrichtung.

EP 2 709 051 A1 lehrt ein Verfahren zum elektronischen Verarbeiten eines Verkehrsdelikts eines Fahrzeugs, das eine Onboard-Unit mit einem Sendeempfänger, einer Eingabeeinrichtung und einer Ausgabeeinrichtung hat.

EP 3 276 991 A2 lehrt ein Verfahren zum Empfangen und Übertragen von Signalen im Zusammenhang mit dem Tracking Area Update (TAU) ohne Stromsparmodus (PSM) durch eine Mobilitätsverwaltungseinheit (MME).

DE 102 53 915 A1 lehrt ein Türsteuersystem für Fahrzeuge mit einem Sender und einem Empfänger zum Detektieren eines elektronischen Schlüssels in einem ersten vorbestimmten Bereich um ein Fahrzeug herum.

WO 2015/122825 A1 lehrt ein elektrisches Infrastruktursystem und Verfahren für ein Fahrzeug, umfassend mehrere elektronische Steuereinheiten für eine oder mehrere Funktionseinheiten für das Fahrzeug.

Dabei ist es allerdings nötig, für diese Funktion gesonderte Steuergeräte im Fahrzeug einzusetzen, was weiterhin mit der Installation von zugehörigen Kommunikationsantennen verbunden sein kann. Dabei entstehen neben den direkten Kosten für die Komponenten auch Nachteile durch die entsprechende Anordnung der Komponenten im Fahrzeug, deren Versorgung und Steuerung.

### Zusammenfassung

Es besteht daher ein Bedarf, die Fern-Bedienung eines Fahrzeugs durch einen sich dem Fahrzeug annähernden oder sich vom Fahrzeug entfernenden Fahrer zu verbessern. Diesem Bedarf tragen die Gegenstände der anhängigen unabhängigen Ansprüche Rechnung.

Ausführungsbeispiele basieren auf dem Kerngedanken, dass die gewünschte Funktionalität der Fern-Bedienung von einem bereits im Fahrzeug vorhandenen Gerät zusätzlich übernommen wird. Hierfür ist das Gerät in großen Teilen in seiner gewohnten Funktion zu benutzen, um möglichst wenige zusätzliche Komponenten zu benötigen. Auf der anderen Seite ist dabei ein sehr niedriger Stromverbrauch sicherzustellen, da der Betrieb der Fern-Bedienung bei abgestelltem Fahrzeug erfolgt, in dem die Fahrzeugbatterie ausschließlich entladen wird. Eine Lösung dieser Aufgabe wird durch eine erweiterte Verwendung von Fahrzeug zu Entität Geräten -V2X- (von engl. Vehicle-to-everything) vorgeschlagen, die in neuen Fahrzeugen weit verbreitet sind und bisher nur im fahrenden Fahrzeug zum Einsatz kommen. Die Erweiterung betrifft den Einsatz im abgestellten Fahrzeug, wobei insbesondere der hohen stromverbrauchende Sender zumindest über längere Perioden abgeschaltet wird und lediglich der Empfänger sowie minimale Zusatzhardware zumindest semipermanent in Betrieb bleibt. Erst nachdem Signale einer Identität eines tragbaren Geräts des Fahrers erfolgreich authentifiziert wurden, werden weitere Komponenten des C-V2X Gerätes in Betrieb genommen, unter anderem der Sender.

Ausführungsbeispiele betreffen ein Kommunikationsmodul zur Authentifizierung eines Mobilfunkgerätes für eine standortspezifische Funktion eines Fahrzeugs. Es umfasst einen Sender, der zum Senden von Mobilfunksignalen in einem Mobilfunksystem ausgebildet ist. Weiter umfasst es einen Empfänger, der zum Empfangen von Mobilfunksignalen in einem Mobilfunksystem ausgebildet ist. Weiter ist ein Kontrollmodul umfasst, das mit dem Sender und dem Empfänger gekoppelt ist und zur Kontrolle des Senders und des Empfängers ausgebildet ist. Das Kontrollmodul bei abgestelltem Fahrzeug ist ferner ausgebildet, um den Sender von einem ersten Modus in einen zweiten Modus zu überführen, wobei der Sender in dem zweiten Modus weniger Energie konsumiert als in dem ersten Modus. Das Kontrollmodul ist ferner ausgebildet, ein empfangenes Mobilfunksignal des Mobilfunkgerätes auszuwerten, das Informationen über eine Identität des Mobilfunkgerätes umfasst. Weiter ist das Kontrollmodul ausgebildet, eine Authentifizierung des Mobilfunkgerätes basierend auf dem Mobilfunksignal durchzuführen, wobei das Mobilfunkgerät nach erfolgreicher Authentifizierung zur Nutzung zumindest einer standortspezifischen Funktion des Fahrzeugs berechtigt ist.

Vorteilhaft wird so ein energieeffizienter Empfangs- und Signalverarbeitungsbetrieb ermöglicht bei einem Gerät mit Sender mit hohem Stromverbrauch.

In Ausführungsbeispielen kann das Kontrollmodul des Kommunikationsmoduls ausgebildet sein, um den Sender nach erfolgreicher Authentifizierung von dem zweiten Modus in den ersten Modus zu überführen.

Vorteilhaft wird die Authentifizierung mit minimalem Hardwareaufwand durchgeführt, der einem minimalen Stromverbrauch entspricht.

In einigen Ausführungsbeispielen wird das Kommunikationsmodul die zumindest eine standortspezifische Funktion zumindest einem oder mehreren Elementen der Gruppe von Begrüßungslicht, Begrüßungston, Verabschiedungslicht, Verabschiedungston, Zugangsberechtigung, Türöffnung, und eine Bereitstellung von Meldeinformation entsprechen.

Vorteilhaft können so sowohl lokale Reaktionen des Fahrzeugs als auch Meldungen an das Mobilfunkgerät des Fahrers veranlasst werden.

In weiteren Ausführungsbeispielen kann das Kontrollmodul des Kommunikationsmoduls bei nicht abgestelltem Fahrzeug fahrzeugspezifische und verkehrsspezifische Information anderer Entitäten auszuwerten und/oder die Aussendung entsprechender eigner Information veranlassen.

Vorteilhaft können so Sender und Empfänger für mehrere Anwendungen genutzt werden, insbesondere für Anwendungen in beiden Betriebsarten (abgestelltes und nicht abgestelltes Fahrzeug).

In einigen Ausführungsbeispielen ist das Kontrollmodul des Kommunikationsmoduls ausgebildet, um die fahrzeugspezifischen und verkehrsspezifischen Information nach dem Fahrzeug zu Entität -V2X- Standard des 3rd Generation Partnership Project (3GPP) zu senden und zu empfangen.

Vorteilhaft kann so eine breite Anwendung des Gerätes sichergestellt werden, da die Verbreitung dieses Standards stark zunimmt. Entsprechend wird das Gerät regelmäßig in Fahrzeugen verbaut werden. Durch die beanspruchte Modifikation tritt ein Zusatznutzen bei vergleichsweise geringem Mehraufwand ein.

In Ausführungsbeispielen kann das Kontrollmodul des Kommunikationsmoduls ausgebildet sein, um bei nicht abgestelltem Fahrzeug den Sender von dem zweiten Modus in den ersten Modus zu überführen.

Vorteilhaft kann so sichergestellt werden, dass das Kommunikationsmodul für seinen bisherigen Einsatz im fahrenden Fahrzeug vollständig betriebsbereit ist.

Weiter kann in Ausführungsbeispielen das Kontrollmodul des Kommunikationsmoduls beim Abstellen des Fahrzeugs den Sender zumindest temporär in den zweiten Modus schalten oder den Sender dauerhaft in den zweiten Modus schalten.

Vorteilhaft kann so eine hohe Flexibilität der Sendernutzung erreicht werden unter Beibehaltung des minimalen Stromverbrauchs.

In manchen Ausführungsbeispielen ist das Kontrollmodul des Kommunikationsmoduls ausgebildet, um vor der Ausführung einer standortspezifischen Funktion des Fahrzeugs eine Entfernung zwischen Fahrzeug und Mobilfunkgerät zu ermitteln, und das die standortspezifische Funktion des Fahrzeugs erst bei Unterschreiten einer vorgegebenen Entfernung zwischen Fahrzeug und Mobilfunkgerät gewährt wird.

Vorteilhaft wird somit sichergestellt, dass die standortspezifische Funktion sich nur dann aktivieren lässt, wenn der Fahrer sich ausreichend nah am Fahrzeug aufhält. Da die standortspezifischen Funktionen auch das Öffnen der Türen umfassen kann, wird so auch Diebstahl vorgebeugt.

Weiter kann in Ausführungsbeispielen das Kontrollmodul des Kommunikationsmoduls ausgebildet sein, um das Mobilfunksignal gemäß eines Fahrzeug zu Entität -V2X-Standards zu empfangen.

Vorteilhaft kann so das Mobilfunkgerät des Fahrers zur Teilnahme an dem -V2X-Verfahren ausgebildet sein und die dafür lokal vorhandenen Sendeempfänger benutzen.

In manchen Ausführungsbeispielen ist das Kontrollmodul des Kommunikationsmoduls ausgebildet, um eine Punkt-zu-Punkt Übertragung für das Mobilfunksignal zwischen Kommunikationsmodul und Mobilfunkgerät zu verwenden.

Vorteilhaft kann so die Vertraulichkeit der ausgetauschten Information erhöht werden bei gleichzeitiger effizienterer Nutzung der Frequenzressourcen.

In Ausführungsbeispielen kann das Kontrollmodul des Kommunikationsmoduls ausgebildet sein, um die Information über die Identität des Mobilfunkgerätes basierend auf dem Fahrzeug zu Person -V2P- (aus dem engl. Vehicle to person) Standards zu empfangen.

Vorteilhaft können so handelsübliche Mobilgeräte zur Kommunikation mit dem Kommunikationsmodul eingesetzt werden, da zu erwarten ist, dass diese handelsüblichen Mobilgeräte mit der-V2P- Funktion regelmäßig ausgestattet werden, um mit Hilfe des übergeordneten V2X Verfahrens im Straßenverkehr gut erkennbar zu sein. Dies gilt besonders für Fahrradfahrer und Fußgänger.

In Ausführungsbeispielen kann das Kontrollmodul des Kommunikationsmoduls ausgebildet sein, um einen abgestellten Zustand des Fahrzeugs anhand einer Information bezüglich einer Verriegelung, eines leeren Fahrersitzes, einer abgeschalteten Zündung oder eines Stillstandes des Fahrzeugs zu detektieren.

Vorteilhaft kann so der Zustand des abgestellten Fahrzeugs sicher und aufwandsgünstig erkannt werden, da die entsprechenden Sensoren im Fahrzeug bereits vorhanden sind.

In manchen Ausführungsbeispielen ist das Kontrollmodul des Kommunikationsmoduls ausgebildet, um abgelegte Daten zur Authentifizierung über eine geografisch entfernte zentrale Einheit zu aktualisieren.

Vorteilhaft kann so die Sicherheit der Authentifizierung und ggf. der verschlüsselten Datenübertragung erhöht werden, in dem die zugehörigen Schlüssel und andere Informationen bei Bedarf ausgetauscht werden können.

Ausführungsbeispiele betreffen auch ein Mobilfunkgerät, das ausgebildet ist zur Kommunikation mit einem Kommunikationsmodul eines abgestellten Fahrzeugs. Es umfasst einen Sender, der zum Senden von Mobilfunksignalen in einem Mobilfunksystem ausgebildet ist und einen Empfänger, der zum Empfangen von Mobilfunksignalen in einem Mobilfunksystem ausgebildet ist. Weiter umfasst es ein Kontrollmodul, das mit dem Sender und dem Empfänger gekoppelt ist und zur Kontrolle des Sender und des Empfängers ausgebildet ist. Das Kontrollmodul ist ferner ausgebildet zum Senden eines Punkt-zu-Punkt Signals an das Kommunikationsmodul mit einer Information über eine Identität des Mobilfunkgerätes, wobei die Information über die Identität des Mobilfunkgerätes zur Authentifizierung des Mobilfunkgerätes durch das Kommunikationsmodul vorgesehen ist.

Weiter ist das Kontrollmodul ausgebildet zum Empfangen eines Signals von dem Kommunikationsmodul bei positiver Authentifizierung des Mobilfunkgerätes mit Informationen zumindest einer standortspezifischen Funktion des Fahrzeugs. Weiter umfasst das Senden eine dem Fahrer zugeordnete Identifikation, die eine Authentifizierung des Fahrers ermöglicht.

Vorteilhaft kann das Mobilfunkgerät dem Fahrer die standortspezifische Funktion des Fahrzeugs zur Ausführung anbieten, es zum Beispiel hupen und/oder blinken lassen. In manchen Ausführungsbeispielen ist das Kontrollmodul des Mobilfunkgeräts ausgebildet, um den empfangenen Informationen zumindest einer standortspezifischen Funktion des Fahrzeugs eine geografische Position des Fahrzeugs zu entnehmen.

Vorteilhaft kann somit das Mobilfunkgerät dem Fahrer den Weg zum Fahrzeug weisen, zum Beispiel unter Verwendung einer Navigationssoftware.

In Ausführungsbeispielen kann das Kontrollmodul des Mobilfunkgeräts ausgebildet sein, um den empfangenen Informationen zumindest einer standortspezifischen Funktion des Fahrzeugs ferner eine Aufforderung zur Übermittlung von Zugangsberechtigungsdaten an das Kommunikationsmodul zu entnehmen.

Vorteilhaft können so dem Fahrzeug Voreinstellungen übermittelt werden, zum Beispiel das vorherige Öffnen der Tür in unsicheren Gegenden zu unterlassen.

Ein Ausführungsbeispiel betrifft eine Mobilfunkstation umfassend ein Mobilfunkgerät.

Vorteilhaft kann die Mobilstation als herstellerspezifisches Mobilfunkgerät ausgebildet sein, das durch spezifische Formgebung oder Design und zusätzlicher Funktionalität gekennzeichnet ist. Es kann zum Beispiel als Fahrzeugschlüssel ausgebildet sein.

Ein weiteres Ausführungsbeispiel betrifft ein Fahrzeug, das ein Kommunikationsmodul umfasst.

Vorteilhaft kann so die neue Funktion mit geringen Mehrkosten für das Fahrzeug bereitgestellt werden, da unter anderem Fahrzeugkomponenten wie Stromversorgung und Verkleidung des Kommunikationsmoduls entfallen können.

Ein weiteres Ausführungsbeispiel betrifft ein System umfassend ein Kommunikationsmodul und ein Mobilfunkgerät oder einer Mobilfunkstation.

Noch ein weiteres Ausführungsbeispiel betrifft ein Verfahren für ein Kommunikationsmodul zur Authentifizierung eines Mobilfunkgerätes für eine standortspezifische Funktion eines abgestellten Fahrzeugs. Dies umfasst die folgenden Schritte: Überführen eines Senders des Kommunikationsmoduls von einem ersten Modus in einen zweiten Modus, wobei der Sender in dem zweiten Modus weniger Energie konsumiert als in dem ersten Modus. Weiter umfasst es ein Empfangen eines Mobilfunksignals von dem Mobilfunkgerät, das Informationen über eine Identität des Mobilfunkgerätes umfasst. Ergänzend umfasst es ein Authentifizieren des Mobilfunkgerätes auf Basis des Mobilfunksignals.

Vorteilhaft wird so ein energieeffizienter Empfangs- und Signalverarbeitungsbetrieb ermöglicht bei einem Gerät mit Sender mit hohem Stromverbrauch.

Ein zusätzliches Ausführungsbeispiel betrifft Verfahren für ein Mobilfunkgerät, das ausgebildet ist zur Authentifizierung des Mobilfunkgerätes in einem Kommunikationsmodul für eine standortspezifische Funktion eines abgestellten Fahrzeugs. Es umfasst die folgenden Schritte: Senden eines Signals an das Kommunikationsmodul für das abgestellte Fahrzeug mit Informationen über eine Identität des Mobilfunkgerätes, wobei die Informationen über die Identität des Mobilfunkgerätes zur Authentifizierung des Mobilfunkgerätes durch das Kommunikationsmodul vorgesehen ist. Zur Steigerung der Vertraulichkeit und der Effizienz der Frequenznutzung wird das Signal als Punk-zu-Punkt-Signal gesendet.

Es umfasst weiter das Empfangen eines Signals von dem Kommunikationsmodul bei positiver Authentifizierung des Mobilfunkgerätes mit Informationen zumindest einer standortspezifischen Funktion des abgestellten Fahrzeugs. Weiter umfasst das Senden eine dem Fahrer zugeordnete Identifikation, die eine Authentifizierung des Fahrers ermöglicht.

Vorteilhaft kann das Mobilfunkgerät dem Fahrer die standortspezifische Funktion des Fahrzeugs zur Ausführung anbieten, es zum Beispiel hupen und/oder blinken lassen. Weitere zusätzliche Ausführungsbeispiele umfassen ein Computerprogramm mit einem Programmcode zum Durchführen zumindest eines der genannten Verfahren, wenn der Programmcode auf einem Computer, einem Prozessor, einem Kontrollmodul oder einer programmierbaren Hardwarekomponente ausgeführt wird.

### Figurenkurzbeschreibung

Ausführungsbeispiele werden nachfolgend bezugnehmend auf die beiliegenden Figuren näher erläutert. Es zeigen:
Fig. 1 ein System mit einem Ausführungsbeispiel eines Mobilfunkgeräts, einem Ausführungsbeispiel eines Kommunikationsmodul und zugehörigen Verfahrensschritten
Fig. 2 ein Blockdiagram eines Ausführungsbeispiels eines Verfahrens für ein Kommunikationsmodul;
Fig. 3 ein Blockdiagram eines Ausführungsbeispiels eines Verfahrens für ein Mobilfunkgerät;
Fig. 4 zeigt ein Blockschaltbild eines Ausführungsbeispiels einer Kommunikationseinrichtung für den C-V2X (zellulare Fahrzeug zu Entität Standard, aus dem engl. Cellular Vehicle to Everything) Betrieb;
Fig. 5 zeigt ein detaillierteres Blockschaltbild eines Ausführungsbeispiels des C-V2X Modems.

### Detaillierte Beschreibung

Ausführungsbeispiele befassen sich mit einem Kommunikationsmodul, einem Fahrzeug, einem System, einem Verfahren und einem Computerprogramm zur Authentifizierung eines Mobilfunkgerätes für eine standortspezifische Funktion eines Fahrzeugs. Verschiedene Ausführungsbeispiele werden nun ausführlicher unter Bezugnahme auf die beiliegenden Zeichnungen beschrieben. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (zum Beispiel, "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie zum Beispiel "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, zum Beispiel diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Die hier und im Folgenden beschriebenen Komponenten werden als "ausgelegt, um" oder als "ausgebildet, um" eine gewisse Funktion durchzuführen oder zu erfüllen beschrieben, wobei diese Begriffe synonym verwendet werden und gegeneinander austauschbar sind. Dabei ist eine solche Komponente jeweils in der Lage die beschriebene Funktion auszuführen, weil beispielsweise entsprechende Software in einem Speicher vorhanden ist oder vorgehalten wird. So ist beispielsweise ein Kontrollmodul, das ausgelegt oder ausgebildet ist, um ein Sendeempfangsmodul zu steuern, und in programmierbarer Hardware implementiert ist, dahingehend auszulegen, dass entsprechende Steuersoftware zur Steuerung des Sendeempfangsmoduls vorhanden ist.

Die Idee von Ausführungsbeispielen betrifft eine Vorrichtung und einen Prozess zur Authentifizierung, Identifizierung und anschließender Aktivierung von Fahrzeugfunktionen über neuartige Direktkommunikation. In bisherigen Anwendungen wird ein Fahrzeug, z.B. bei Annäherung des Fahrers, über die Bluetooth Low Energy Technologie geweckt. Dies ist technisch ein sehr guter Weg, jedoch ist es mit recht hohen Kosten für den Einbau eines gesonderten Bluetooth Low Energy Steuergerätes mit den zugehörigen Kommunikationsantennen verbunden. Die Umsetzung kann in Zukunft wesentlich kostengünstiger über Direktkommunikationstechnologie erfolgen. Diese Direktkommunikation wird zurzeit hauptsächlich zur Implementation von Verkehrssicherheitsfunktionen für fahrenden Verkehr geplant. Die Direktkommunikation kann zum Beispiel als das bereits genannte C-V2X Verfahren ausgebildet sein. Mit Hilfe der in dieser Idee beschriebenen Ergänzungen kann diese Kommunikation auch für die Anwendung beim stehenden Fahrzeug genutzt werden.

Die nachfolgenden Ausführungsbeispiele setzen diese Idee auf vielfältige Weise um.

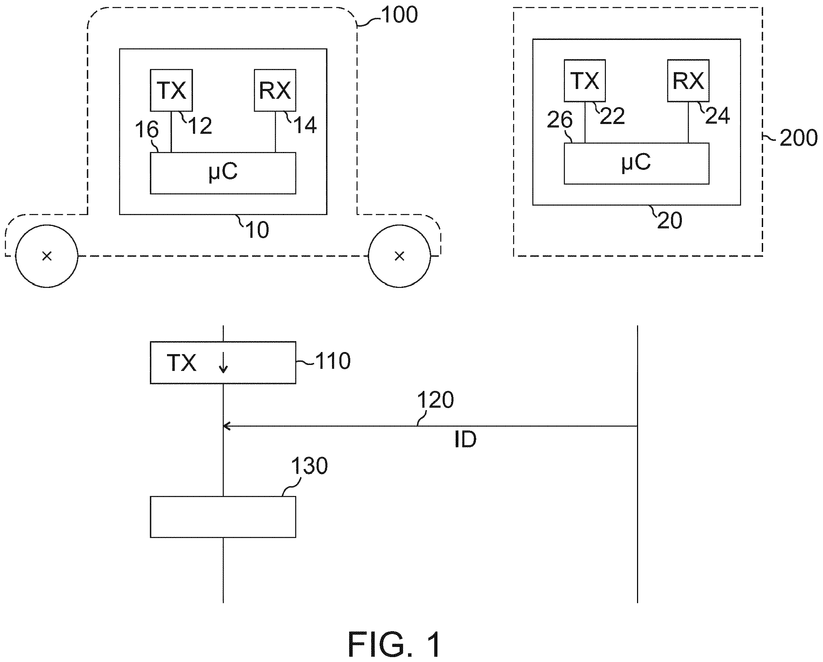

Fig. 1 zeigt ein Ausführungsbeispiel eines Kommunikationsmoduls 10 zur Authentifizierung eines Mobilfunkgerätes 20 für eine standortspezifische Funktion eines Fahrzeugs 100. Es umfasst einen Sender 12, der zum Senden von Mobilfunksignalen in einem Mobilfunksystem ausgebildet ist, einen Empfänger 14, der zum Empfangen von Mobilfunksignalen in einem Mobilfunksystem ausgebildet ist und ein Kontrollmodul 16, das mit dem Sender 12 und dem Empfänger 14 gekoppelt ist und zur Kontrolle des Senders 12 und des Empfängers 14 ausgebildet ist. Bei abgestelltem Fahrzeug 100 ist das Kontrollmodul 16 ferner ausgebildet, um den Sender 12 von einem ersten Modus in einen zweiten Modus zu überführen, wobei der Sender 12 in dem zweiten Modus weniger Energie konsumiert als in dem ersten Modus. Weiter ist das Kontrollmodul 16 ausgebildet, um ein empfangenes Mobilfunksignal des Mobilfunkgerätes 20 auszuwerten, das Informationen über eine Identität des Mobilfunkgerätes 20 umfasst. Weiter ist das Kontrollmodul 16 ausgebildet, um ein Authentifizieren des Mobilfunkgerätes 20 basierend auf dem Mobilfunksignal durchzuführen, wobei das Mobilfunkgerät 20 nach erfolgreicher Authentifizierung zur Nutzung zumindest einer standortspezifischen Funktion des Fahrzeugs 100 berechtigt ist.

Das Kommunikationsmodul 10 kann in Ausführungsbeispielen in einem Fahrzeug 100 angeordnet sein.

Fig. 1 zeigt ferner ein Ausführungsbeispiel eines Mobilfunkgeräts 20, das ausgebildet ist zur Kommunikation mit einem Kommunikationsmodul 10 eines abgestellten Fahrzeugs 100. Das Mobilgerät umfasst einen Sender 22, der zum Senden von Mobilfunksignalen in einem Mobilfunksystem ausgebildet ist sowie einen Empfänger 24, der zum Empfangen von Mobilfunksignalen in einem Mobilfunksystem ausgebildet ist. Weiter umfasst das Mobilgerät ein Kontrollmodul 26, das mit dem Sender 22 und dem Empfänger 24 gekoppelt ist und zur Kontrolle des Senders 22 und des Empfängers 24 ausgebildet ist. Das Kontrollmodul 26 ist ferner ausgebildet zum Senden eines Rundfunksignals an das Kommunikationsmodul mit einer Information über eine Identität des Mobilfunkgerätes 20, wobei die Information über die Identität des Mobilfunkgerätes 20 zur Authentifizierung des Mobilfunkgerätes 20 durch das Kommunikationsmodul 10 vorgesehen ist. Schließlich ist das Kontrollmodul 26 ausgebildet zum Empfangen eines Signals von dem Kommunikationsmodul 10 bei positiver Authentifizierung des Mobilfunkgerätes 20 mit Informationen zumindest einer standortspezifischen Funktion des Fahrzeugs.

Eine Mobilfunkstation 200 kann in Ausführungsbeispielen ein Mobilfunkgerät 20 umfassen. Die Mobilfunkstation kann dabei mit herstellerspezifischer Formgebung oder Design und Zusatzfunktionen ausgebildet sein. Die Formgebung kann in Ausführungsbeispielen als mechanischer Fahrzeugschlüssel ausgebildet sein.

Ein Ausführungsbeispiel zeigt ein System umfassend ein Kommunikationsmodul 10 und ein Mobilfunkgerät oder einer Mobilfunkstation 200.

In Ausführungsbeispielen können Sender 12, 22 typische Sendekomponenten umfassen, wie einen oder mehrere rauscharme Verstärker (LNAs), einen oder mehrere Leistungsverstärker (PAs), einen oder mehrere Duplexer, einen oder mehrere Diplexer, einen oder mehrere Filter oder Filterschaltkreise, einen oder mehrere Wandler, einen oder mehrere Mischer, entsprechend angepassten Radiofrequenzkomponenten usw. Die Antennen können beliebigen Sendeantennen entsprechen, wie Hornantennen, Dipolantennen, Patchantennen, Sektorantennen usw. Die Antennen können in einer definierten geometrischen Anordnung angeordnet sein, wie beispielsweise eine gleichförmige Anordnung, eine lineare Anordnung, eine kreisförmige Anordnung, eine dreieckige Anordnung, ein gleichförmiges Feld, eine Feldanordnung, oder Kombinationen dieser Anordnungen.

Empfänger 14, 24 können in Ausführungsbeispielen typische Empfangskomponenten umfassen wie einen oder mehrere rauscharme Verstärker (LNAs), einen oder mehrere Duplexer, einen oder mehrere Diplexer, einen oder mehrere Filter oder Filterschaltkreise, eine oder mehrere Wandler, einen oder mehrere Mischer, entsprechend angepassten Radiofrequenzkomponenten usw. Die zugehörigen Antennen können in Ausführungsbeispielen den Antennen des Senders entsprechen.

In Ausführungsbeispielen ist ein Sender, ein Empfänger, ein Mobilfunkgerät, oder ein Mobilgerät an ein Funksystem, ein Mobilfunksystem oder Mobilkommunikationssystem angepasst, in dem Sinne, dass es die zu einer diesbezüglichen Kommunikation erforderlichen Komponenten aufweist, wie beispielsweise Antennen, Filter, Verstärker, ein oder mehrere Prozessoren, Anzeige, etc. Solche Systeme umfassen beispielsweise Bluetooth, Wireless Local Area Network (WLAN), WirelessFidelity (WiFi), Mobilfunk, etc. Dabei kommen beispielsweise Mobilfunksysteme, die von entsprechenden Standardisierungsgremien, wie z.B. der 3rd Generation Partnership Project (3GPP)-Gruppe, standardisiert werden, in Betracht. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), System der fünften Generation (5G) oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (auch engl. "Time Division Multiple Access (TDMA)"), Frequenzbereichsvielfachzugriffsverfahren (auch engl. "Frequency Division Multiple Access (FDMA)"), Kodebereichsvielfachzugriffsverfahren (auch engl. "Code Division Multiple Access (CDMA)"), Orthogonalen Frequenzbereichsvielfachzugriffsverfahren (auch engl. "Orthogonal Frequency Division Multiple Access (OFDMA)") oder einer anderen Technologie bzw. Vielfachzugriffverfahren basiert. Im Folgenden werden die Begriffe Mobilfunksystem, Mobilfunknetz, Mobilkommunikationssystem und Mobilfunknetzwerk synonym benutzt.

Das Kontrollmodul 16, 26 kann in Ausführungsbeispielen einem beliebigen Controller oder Prozessor oder einer programmierbaren Hardwarekomponente entsprechen. Beispielsweise kann eine/ein Kontrolleinrichtung/-modul 16, 26 auch als Software realisiert sein, die für eine entsprechende Hardwarekomponente programmiert ist. Insofern kann ein Kontrollmodul 16, 26 als programmierbare Hardware mit entsprechend angepasster Software implementiert sein. Dabei können beliebige Prozessoren, wie Digitale Signal Prozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren oder Mikrokontroller zur Implementierung des Kontrollmoduls denkbar. Es sind auch Implementierungen in integrierter Form mit anderen Kontrolleinheiten denkbar, beispielsweise in einer Kontrolleinheit für ein Fahrzeug, die zusätzlich noch ein oder mehrere andere Funktionen umfasst. Die hierin beschriebenen Verfahrensschritte können in Ausführungsbeispielen durch die Kontrollmodule 16, 26 bzw. durch die oder mittels der jeweiligen Sender und Empfänger 12, 14, 22, 24 ausgeführt werden. Insofern sind beschriebene Verfahrensschritte durch die Vorrichtungskomponenten durchführbar. In Ausführungsbeispielen kann ein Kontrollmodul 14, 24 durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) realisiert sein.

In Ausführungsbeispielen kann eine Authentifizierung ein Nachweis (Verifizierung) einer behaupteten Eigenschaft einer Entität sein, die beispielsweise als Mobilfunkgerät ausgeführt sein kann. Dabei wird durch einen geeigneten Vorgang, dem in Ausführungsbeispielen ein geheimer Schlüssel zu Grunde liegen kann, die Verifizierung der behaupteten Eigenschaft durchgeführt. Die Eigenschaft kann eine Identität des Gerätes sein. In Ausführungsbeispielen kann auch eine Verschlüsselung als die von einem Schlüssel abhängige Umwandlung von einen "Klartext" genannten Daten in einen "Geheimtext" ausgebildet sein, so dass der Klartext aus dem Geheimtext nur unter Hinzuziehung eines geheimen Schlüssels wiedergewonnen werden kann. So können Daten gegenüber unberechtigtem Zugriff geschützt werden.

Das System kann als Summe aller Komponenten des Mobilfunksystems ausgeführt sein, das alle benötigten Funktionen und Einrichtungen zum Betrieb beinhaltet. Beispielsweise kann das System nach einem der 3GPP Standards 2G-5G ausgestaltet sein. In Ausführungsbeispielen können Mobilfunkgeräte, die auch als Mobilgeräte bezeichnet sein können, als tragbare Geräte wie Handys, Tabletts, Laptops, tragbare Computer oder als Funkmodule oder dergleichen ausgebildet sein. Sie können auch als Bestandteil von Kleidung, Accessoires, zum Beispiel als Brille, als Surf-stick oder dergleichen ausgebildet sein. Mobilgeräte, die auch Handheld-Geräte genannt werden, können auch Benutzern zugeordnet sein, wenn die Mobilgeräte die Benutzerdaten auch kommunizieren können.

Im Folgenden wird angenommen, dass in Ausführungsbeispielen ein Mobilfunksystem zumindest einen stationären Sendeempfänger im Sinne einer Basisstation umfasst, der über Anbindung an den leitungsgebundenen Teil des Mobilfunknetzes verfügt. Auf der anderen Seite wird davon ausgegangen, dass das Mobilfunknetz zumindest einen mobilen Sendeempfänger (Mobilfunkgerät, Mobilfunkendgerät) umfasst, wobei sich der Begriff "mobil" hier darauf beziehen soll, dass mit diesem Sendeempfänger über die Luftschnittstelle, d. h. kabellos/schnurlos, kommuniziert wird. Ein solcher mobiler Sendeempfänger kann beispielsweise einem tragbaren Telefon, einem Smartphone, einem Tablet-Computer, einem tragbaren Computer, einem Fahrzeug oder einem Funkmodul entsprechen, der nicht zwingend mobil in dem Sinne ist, als dass er sich tatsächlich gegenüber seiner Umgebung bewegt. Der Sendeempfänger kann auch stationär sein (z.B. relativ zu einem Kfz), mit dem Mobilfunknetz jedoch drahtlos kommunizieren. Insofern kann die bereits erwähnte Basisstation einem der oben erwähnten Standards entsprechen, beispielsweise einer NodeB, einer eNodeB, usw.

Die Fig. 1 zeigt ferner Ausführungsbeispiele eines Verfahrens für ein Kommunikationsmodul 10 zur Authentifizierung eines Mobilfunkgerätes 20 für eine standortspezifische Funktion eines Fahrzeugs 100. Dies umfasst die folgenden Schritte: Bei abgestelltem Fahrzeug 100 überführen 110 eines Senders 12 des Kommunikationsmoduls 10 von einem ersten Modus in einen zweiten Modus, wobei der Sender 12 in dem zweiten Modus weniger Energie konsumiert als in dem ersten Modus. Weiter umfasst es das Empfangen 120 eines Mobilfunksignals von dem Mobilfunkgerät 20, das Informationen über eine Identität des Mobilfunkgerätes 20 enthält. Anschließend findet eine Authentifizierung 130 des Mobilfunkgerätes 20 auf Basis des Mobilfunksignals statt.

Darüber hinaus zeigt Fig. 1 zumindest teilweise Ausführungsbeispiele mit einem Verfahren für ein Mobilfunkgerät 20, das ausgebildet ist zur Authentifizierung des Mobilfunkgerätes 20 in einem Kommunikationsmodul 10 für eine standortspezifische Funktion eines abgestellten Fahrzeugs 100. Dies umfasst Senden 120 eines Signals an das Kommunikationsmodul 10 für das abgestellte Fahrzeug mit Informationen über eine Identität des Mobilfunkgerätes 20, wobei die Informationen über die Identität des Mobilfunkgerätes 20 zur Authentifizierung des Mobilfunkgerätes 20 durch das Kommunikationsmodul 10 vorgesehen sind. Weiter umfasst es das in Fig. 1 nicht dargestellte Empfangen eines Signals von dem Kommunikationsmodul 10 bei positiver Authentifizierung des Mobilfunkgerätes 20 mit Informationen zumindest einer standortspezifischen Funktion des abgestellten Fahrzeugs 100.

Zusätzlich zur Authentifizierung kann in Ausführungsbeispielen die im 3GPP Standard schon vorhandene Übertragung über abgesicherte Verbindungen (Encryption, auch Verschlüsselung genannt) auch die Kommunikation sensitiver Inhalte über eine Funkschnittstelle erlauben. Hierzu kann in Ausführungsbeispielen das Authentifizierungssystem der Direktkommunikation genutzt und mit der Möglichkeit erweitert werden, über den Netzwerkbetreiber temporär und lokal begrenzt Zertifikate zur Absicherung der Kommunikation zu erhalten. In Ausführungsbeispielen kann ein Absicherungsmittel für die bidirektionale Kommunikation eine Authentifizierungsfunktion und/oder eine Verschlüsselungsfunktion umfassen. Das Kontrollmodul 16 kann dann ausgebildet sein, um eine zeitlich und/oder örtlich begrenzte Vereinbarung von Zertifikaten zur Absicherung der Kommunikation zu ermöglichen.

In diesem Konzept sind in Ausführungsbeispielen die direkte Kommunikation zwischen Mobilfunkendgeräten beziehungsweise Kontrollmodulen möglich, die beispielsweise auch mit D2D von engl. "device-to-device communication" bezeichnet werden. Aus der Standardisierung sind diesbezügliche Erweiterungen auf Kommunikation zwischen Fahrzeugen bekannt. Ein Beispiel ist die 3GPP V2V (von vehicle-to-vehicle) Kommunikation als Teil des C-V2X Standards mit der PC5 Schnittstelle oder auch Carto-Car Kommunikation mit der 802.11p Schnittstelle zu nennen. In Ausführungsbeispielen kann eines dieser Systeme zum Einsatz kommen und das Kommunikationsmodul 10, bzw. deren Sender 12 und Empfänger 14 und Kontrollmodul 16, entsprechend angepasst sein. Dies gilt analog für das Mobilfunkgerät 20 mit seinen Komponenten.

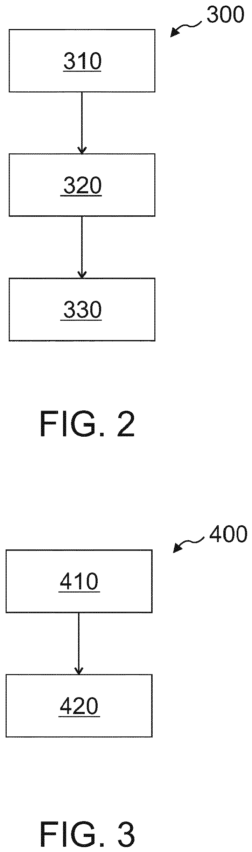

Fig. 2 zeigt als Blockschaltbild ein Ausführungsbeispiel eines Verfahrens 300 für ein Kommunikationsmodul 10 zur Authentifizierung eines Mobilfunkgerätes 20 für eine standortspezifische Funktion eines abgestellten Fahrzeugs 100, umfassend die folgenden Schritte: Überführen 310 eines Senders 12 des Kommunikationsmoduls 10 von einem ersten Modus in einen zweiten Modus, wobei der Sender 12 in dem zweiten Modus weniger Energie konsumiert als in dem ersten Modus; Empfangen 320 eines Mobilfunksignals von dem Mobilfunkgerät 20, das Informationen über eine Identität des Mobilfunkgerätes 20 umfasst; Authentifizieren 330 des Mobilfunkgerätes 20 auf Basis des Mobilfunksignals.

Fig. 3 zeigt als Blockschaltbild ein Ausführungsbeispiel eines Verfahrens 400 für ein Mobilfunkgerät 20, das ausgebildet ist zur Authentifizierung des Mobilfunkgerätes 20 in einem Kommunikationsmodul 10 für eine standortspezifische Funktion eines abgestellten Fahrzeugs 100, umfassend die folgenden Schritte: Senden 410 eines Signals an das Kommunikationsmodul 10 für das abgestellte Fahrzeug mit Informationen über eine Identität des Mobilfunkgerätes 20, wobei die Informationen über die Identität des Mobilfunkgerätes 20 vorgesehen ist zur Authentifizierung des Mobilfunkgerätes 20 durch das Kommunikationsmodul 10; Empfangen 420 eines Signals von dem Kommunikationsmodul 10 bei positiver Authentifizierung des Mobilfunkgerätes 20 mit Informationen zumindest einer standortspezifischen Funktion des Fahrzeugs 100.

Es wird erwartet, dass ab ca. 2019 Fahrzeuge über eine entsprechende Kommunikationseinheit verfügen werden, die neben eCall (emergency call) auch über den Funktionsumfang C-V2X oder später 5G (5. Generation zellularer Mobilfunk) C-V2X verfügen. Die heutige Implementierung von Direktkommunikationsfunktionen ohne Umwege über zusätzliche Netzkomponenten des Mobilfunknetzes zielt auf Erhöhung der Verkehrssicherheit, der Effizienz oder auch des Komforts bei Fahrzeugen in Bewegung, siehe ETSI (European Standards Organization) TR102.638 oder C-IST (Cooperative Intelligent Transport Systems) Report der EU. Dabei steht insbesondere die direkte Fahrzeug zu Fahrzeug Kommunikation V2V oder Fahrzeug zu Infrastruktur Kommunikation V2I (vehicle to infrastructure) im Vordergrund. Durch eine Erweiterung des auf dem 3GPP Standard beruhenden Kommunikationssystem C-V2X nach Release 14 kann der Funktionsumfang erhöht werden. Dazu muss folgendes beachtet werden:
Die V2X Implementierung im Fahrzeug enthält eine Einrichtung zur sicheren Aufbewahrung von Zugangsinformationen (Secure Element) und zur Identifikation von authentifiziertem Austausch von Information. Dieses System wird dahingehend erweitert, dass der Fahrzeughersteller selbst eine Identifizierungsinformation des Fahrzeugeigentümers/Nutzers hinzufügen kann, zum Beispiel in einem personalen Modus des vorhandenen C-V2X Modems. Diese Identifizierungsinformation kann auch in Mobilfunkendgeräten hinterlegbar sein. In diesem personalem Mode lassen sich gemäß Ausführungsbeispielen herstellerspezifische Funktionen anordnen, die über den standardisierten C-V2X Funktionsumfang hinausgehen, beziehungsweise die Funktionen mit anderen Partnern als im Standard vorgesehen nutzen.

Entsprechend kann gemäß Ausführungsbeispielen die genannte Identifikation vor einem authentifiziertem Austausch von Information auch mit anderen Geräten Anwendung finden, zum Beispiel mit handelsüblichen Mobilfunkgeräten für den zellularen Mobilfunk, auf denen Applikationen der Fahrzeughersteller ausgeführt werden. Diese können dem Fahrer zugeordnet sein, was insbesondere die Daten der Identifikation umfasst. So wird auch eine Authentifikation des Fahrers ermöglicht.

Diese Zugangsinformation ist ausschließlich für Dienste des stillstehenden Fahrzeugs nutzbar, in dem der bekannte C-V2X Standard funktionslos ist. Entsprechend kann der oben genannte personale Mode des C-V2X Modems, das auch Standbybetrieb oder inaktiver Mode oder nicht abgestelltes Fahrzeug genannt wird, auf ein stillstehendes Fahrzeug, also ein abgestelltes Fahrzeug, ausgerichtet sein. Die Zugangsinformation für angebotene Dienste bei Stillstand des Fahrzeugs wird durch den Fahrzeughersteller, zum Beispiel Audi, mit Hilfe eines eigenen Backends kontrolliert. Dieses Backend kann als Server ausgebildet sein, der vom Fahrzeughersteller betrieben wird.

In Ausführungsbeispielen kann das Kommunikationsmodul 10 ausgebildet sein, um abgelegte Daten zur Authentifizierung über eine geografisch entfernte zentrale Einheit zu aktualisieren. Die Daten können in Ausführungsbeispielen in einem Sicherheitsmodul abgelegt sein.

Ein zur Ablage verwendetes Sicherheitsmodul (Security Modul) kann in Ausführungsbeispielen als ein internes oder externes Gerät für die effiziente und sichere Ausführung kryptographischer Operationen oder Applikationen bezeichnet werden. Dies ermöglicht zum Beispiel, die Vertrauenswürdigkeit und die Integrität von Daten und den damit verbundenen Informationen sicherzustellen. Um die Vertrauenswürdigkeit zu gewährleisten, kann es erforderlich sein, die zum Einsatz kommenden kryptographischen Schlüssel sowohl softwaretechnisch als auch gegen physische Angriffe oder Seitenkanalangriffe zu schützen.

Im Normalbetrieb der V2X (Vehicle-to-everything) Implementierung im Fahrzeug, auch aktiver Mode genannt, wird bei Bewegung des Fahrzeugs zum einen über ein Broadcast System regelmäßig Fahrzeuginformation (Position, Geschwindigkeit, Fahrzeugeinstellungen) verteilt, sowie auf eingehende Broadcastinformation andere Teilnehmer des V2X Systems gehört. Dazu wird der normale C-V2X Modus des C-V2X Modems genutzt.

Dazu kann in Ausführungsbeispielen das Kontrollmodul 16 des Kommunikationsmoduls 10 ausgebildet sein, um bei nicht abgestelltem Fahrzeug 100 fahrzeugspezifische und verkehrsspezifische Information anderer Entitäten auszuwerten und/oder die Aussendung entsprechender eigner Information zur veranlassen.

Weiter kann das Kontrollmodul 16 des Kommunikationsmoduls 10 in Ausführungsbeispielen ausgebildet sein, um die fahrzeugspezifischen und verkehrsspezifischen Information nach dem Fahrzeug zu Entität -V2X- Standard zu senden und zu empfangen.

Darüber hinaus kann in Ausführungsbeispielen das Kontrollmodul 16 des Kommunikationsmoduls 10 ausgebildet sein, um bei nicht abgestelltem Fahrzeug 100 den Sender 12 von dem zweiten Modus 630 in den ersten Modus 600 zu überführen. Der Sender 12 hat einen besonders hohen Stromverbrauch und wird deshalb im Standbybetrieb in einer stromsparenden Weise betrieben, wie später noch detaillierter erläutert werden wird.

Das V2X System im Fahrzeug wird aus dem Normalbetrieb (aktiver Mode, fahrendes Fahrzeug, regelmäßiges Aussenden von V2X Nachrichten (CAM (Cooperative Awareness Message), DENM (Decentralised Notification Messages)), Empfang von Broadcast Nachrichten) in den Standbybetrieb (Empfang von Information durch authentifizierten Nutzer; Sendefunktion nur nach erfolgter Authentifizierung) umgeschaltet. Dieses Umschalten beinhaltet das Erkennen des Fahrzeugzustandes (zum Beispiel Zündung aus, Stillstand) sowie die Umschaltung auf einen Empfangsmodus/personalen Modus/ Standbybetrieb zur Reduktion der Leistungsaufnahme, sowie die Aktivierung des persönlichen Modus, um ausschließlich auf authentifizierte Nachrichten des Nutzers zu reagieren.

Entsprechend kann in Ausführungsbeispielen der Sender 12 im abgestellten Fahrzeug nach erfolgreicher Authentifizierung von dem zweiten Modus in den ersten Modus überführt werden. Während der Empfänger zumindest regelmäßig in Betrieb ist zum Empfangen einer zugelassenen Mobilgeräte-Identifikation, kann während dieser Zeit der Sender stromsparend betrieben werden, in Ausführungsbeispielen sogar ausgeschaltet sein.

Weiter kann in Ausführungsbeispielen das Kontrollmodul 16 des Kommunikationsmoduls 10 ausgebildet sein, um beim Abstellen des Fahrzeugs 100 den Sender 12 zumindest temporär in den zweiten Modus zu schalten oder den Sender 12 dauerhaft in den zweiten Modus zu schalten. Der Sender ist der wesentliche Stromverbraucher des Kommunikationsmoduls.

Darüber hinaus kann in Ausführungsbeispielen im abgestellten Fahrzeug das Kontrollmodul 16 des Kommunikationsmoduls 10 ausgebildet sein, um das Mobilfunksignal gemäß eines Fahrzeug zu Entität -V2X- Standards zu empfangen.

Des Weiteren kann im abgestellten Fahrzeug das Kontrollmodul 16 des Kommunikationsmoduls 10 in Ausführungsbeispielen ausgebildet sein, um die Information über die Identität des Mobilfunkgerätes 20 basierend auf dem Fahrzeug zu Person -V2P- Standard zu empfangen.

Es können auf diese Weise die Standardkomponenten der C-V2X Einheit in ihrer üblichen Betriebsart weiterhin genutzt werden, nur dass sie im Standbymodus oder - betrieb der herstellerspezifischen Applikation auf handelsüblichen Mobilfunkgeräten zugeordnet sind. Von diesen wird erwartet, dass sie in naher Zukunft für die Teilnahme ihrer Nutzer am Straßenverkehr im Fahrzeug zu Person -V2P- Standard kommunizieren können.

Weiter kann in Ausführungsbeispielen das Kontrollmodul 16 des Kommunikationsmoduls 10 ausgebildet sein, um den abgestellten Zustand des Fahrzeugs 100 anhand einer Information bezüglich einer Verriegelung, eines leeren Fahrersitzes, einer abgeschalteten Zündung oder eines Stillstandes des Fahrzeugs 100 zu detektieren.

Als Funktionen für den Fahrer bei Annäherung bzw. Verlassen des Fahrzeugs stehen eine Anzahl von Funktionen zur Verfügung. Diese umfassen das Erkennung der Entfernung des authentifizierten Nutzers. Dies kann über GNSS (Global Navigation Satellite System) oder über das System selbst geschehen, da Zeitsynchronisation ein Teil des V2X Systems ist. So lassen sich standortspezifische Funktionen realisieren, die Begrüßungslicht, Begrüßungston, Verabschiedungslicht/ton, Meldeinformation und weiteres umfassen.

Entsprechend kann in Ausführungsbeispielen die zumindest eine standortspezifische Funktion zumindest einem oder mehreren Elementen der Gruppe von Begrüßungslicht, Begrüßungston, Verabschiedungslicht, Verabschiedungston, Zugangsberechtigung, Türöffnung und eine Bereitstellung von Meldeinformation entsprechen.

Weiter kann in Ausführungsbeispielen das Kontrollmodul 16 des Kommunikationsmoduls 10 ausgebildet sein, um vor der Ausführung einer standortspezifischen Funktion des Fahrzeugs 100 eine Entfernung zwischen Fahrzeug 100 und Mobilfunkgerät 20 zu ermitteln. Darüber hinaus kann in Ausführungsbeispielen vorgesehen sein, die standortspezifische Funktion des Fahrzeugs erst bei Unterschreiten einer vorgegebenen Entfernung zwischen Fahrzeug 100 und Mobilfunkgerät 20 freigegeben wird.

Zur Steigerung der Vertraulichkeit und der Effizienz der Frequenznutzung kann darüber hinaus die Rundfunkübertragung der Signale durch eine Punkt zu Punkt Kommunikation ersetzt werden, die für die vorliegenden Ausführungsbeispiele ausreicht.

Entsprechend kann in Ausführungsbeispielen das Kontrollmodul 16 des Kommunikationsmoduls 10 ausgebildet sein, um eine Punkt-zu-Punkt Übertragung für das Mobilfunksignal zwischen Kommunikationsmodul 10 und Mobilfunkgerät 20 zu verwenden.

Weiter kann in Ausführungsbeispielen das Kontrollmodul 16 des Kommunikationsmoduls 10 ausgebildet sein, um den empfangenen Informationen zumindest einer standortspezifischen Funktion des Fahrzeugs 100 eine geografische Position des Fahrzeugs 100 zu entnehmen.

Persönliche Endgeräte mit Fähigkeit der P2V (Pedestrian to Vehicle) Kommunikation (durch entsprechenden Chipsatz) werden ab 2019 auf dem Markt sichtbar sein. Diese werden durch eine Hersteller Applikation, zum Beispiel von Audi, um die Funktion persönlicher Modus zur V2X Kommunikation erweitert. Diese Applikation kann einen umfänglichen Informationsaustausch mit dem Fahrzeug veranlassen.

Entsprechend kann in Ausführungsbeispielen das Kontrollmodul 26 des Mobilfunkgerätes 20 ausgebildet sein, um den empfangenen Informationen zumindest einer standortspezifischen Funktion des Fahrzeugs 100 eine Aufforderung zur Übermittlung von Zugangsberechtigungsdaten an das Kommunikationsmodul 10 zu entnehmen.

Weiter bezieht sich ein Ausführungsbeispiel auf ein Computerprogramm mit einem Programmcode zum Durchführen zumindest eines der genannten Verfahren, wenn der Programmcode auf einem Computer, einem Prozessor, einem Kontrollmodul oder einer programmierbaren Hardwarekomponente ausgeführt wird. Ausführungsbeispiele stellen auch ein digitales Speichermedium bereit, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

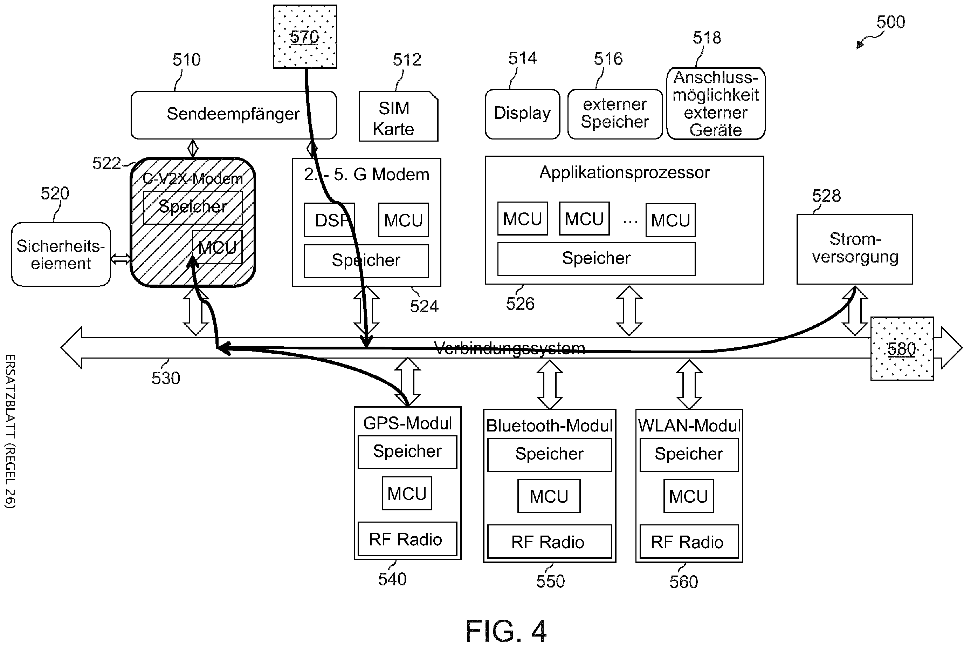

Fig. 4. zeigt ein weiteres Ausführungsbeispiel einer Kommunikationseinrichtung 500 mit verbundenen Sendeempfängern für lokale Einrichtungen, die als GPS Modul 540, Bluetooth Modul 550 und als WLAN Modul 560 ausgeführt sind. Die Verbindung zur Kommunikationseinrichtung 500 ist über ein Verbindungssystem 530 (interconnect system) hergestellt, das beispielsweise als internes Bussystem ausgebildet sein kann.

Die Kommunikationseinrichtung 500 umfasst einen Sendeempfänger 510 (Cellular RF (Radio Frequency) Receiver) zum Senden und Empfangen von Radiosignalen gemäß der Standards und Frequenzbänder der 2. - 5. Generation des zellularen Mobilfunks. Dieser umfasst den Sender 12 und Empfänger 14 der Fig. 1. Der Sendeempfänger 510 ist gekoppelt mit einem C-V2X Modem 522, das einen Speicher (Memory) und einen Prozessor (MCU) umfasst zur Aufbereitung der Sendeempfangssignale gemäß dem jeweiligen Mobilfunkstandard. Das C-V2X Modem 522 entspricht dem Kommunikationsmodul 10 der Fig. 1

Das C-V2X Modem 522 ist seinerseits gekoppelt mit einem Sicherheitselement (secure element) 520 zur Ablage von sicherheitsrelevanten Daten, die gegen unbefugtes Auslesen geschützt sind. Weiter ist das C-V2X Modem 522 mit dem Verbindungssystem 530 gekoppelt. Der Sendeempfänger 510 ist weiter gekoppelt mit einem Modem 524 für die Verarbeitung von Signalen gemäß den Standards der 2. - 5. Generation des zellularen Mobilfunks. Das Modem 524 umfasst einen digitalen Signalprozessor (DSP), einen weiteren Prozessor (MCU) sowie einen Speicher (Memory). Weiter umfasst die Kommunikationseinrichtung 500 eine SIM (Subcriber Identity Module) Card 512 im zugehörigen Lesegerät zur Unterstützung der Kommunikationsfunktionen, eine oder mehrere Anzeigeeinheiten 514 (LCDs), einen externen Speicher 516 (Ext. Mem) sowie eine Anschlussmöglichkeit externer Geräte 518 (Peripherals). Ein Applikationsprozessor 526 umfasst mehrere Prozessoren (MCU) sowie Speicher (Memory). Er ist mit dem Verbindungssystem 530 gekoppelt. Eine Stromversorgung 528 ist ebenfalls mit dem Verbindungssystem 530 gekoppelt.

Das GPS Modul 540, das Bluetooth Modul 550 und das WLAN Modul 560 umfassen jeweils einen Speicher (Memory), einen Prozessor (MCU) sowie ein Sendeempfangsmodul nach dem entsprechenden Standard.

Die Pfeile skizzieren die neuen Aspekte der Ausführungsbeispiele. Ausgehend von Vorgang 570 wird eine neue Authentifizierungsinformation eingebracht. Gemäß Vorgang 580 wird in Ausführungsbeispielen der Fahrzeugzustand (abgestellt oder nicht abgestellt) erkannt und entsprechend die Konfiguration des C-V2X Modems vorgenommen, also zwischen den beiden Modi abgestelltem Fahrzeug und nicht abgestelltem Fahrzeug unterschieden. Somit kann das System für die Ausführungsbeispiele eingerichtet werden.

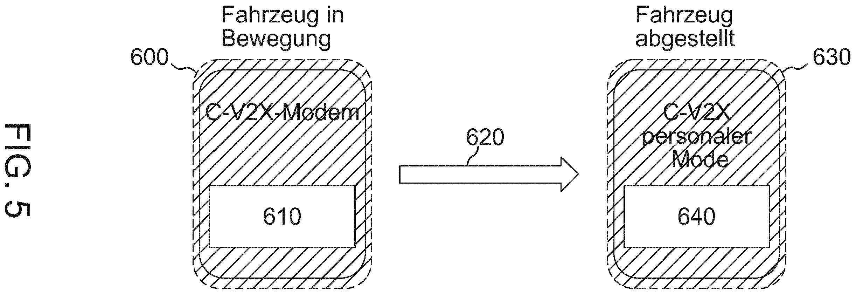

Fig. 5. zeigt in einem weiteren Ausführungsbeispiel ein detaillierteres Blockschaltbild eines Ausführungsbeispiels des C-V2X Modems. Dabei zeigt der Block Fahrzeug in Bewegung 600 den Betrieb bei nicht abgestelltem Fahrzeug. Hier werden Rundfunksignale (Broadcast Signals) 610 gesendet und empfangen, die mit anderen Fahrzeugen und/oder mit Infrastruktureinrichtungen ausgetauscht werden. Dabei ist das C-V2X Modems konfiguriert, periodisch den Fahrzeugzustand als Rundfunksignal zu senden. Dazu ist der Sender 12 eingeschaltet. Gleichzeitig ist das Modem für einen Empfang konfiguriert, um von benachbarten Fahrzeugen oder von Infrastruktur deren Signale zu empfangen und zu authentifizieren.

Wird das Abstellen des Fahrzeugs erkannt, löst in Ausführungsbeispielen der Vorgang 580 eine Re-Konfiguration 620 des C-V2X Modems aus in den Zustand C-V2X personal Modus/abgestelltes Fahrzeug 630. Dafür können in Ausführungsbeispielen die Ereignisse Fahrzeug parkt, Fahrzeug ist nicht in Bewegung über einen gewissen Zeitraum und/oder Zündung ist ausgeschaltet herangezogen werden.

In diesem C-V2X Modul personal Modus 630 ist in Ausführungsbeispielen nur die Kommunikation mit vom Fahrzeug oder vom Hersteller zugelassenen Fahrern erlaubt 640. Es werden keine Signale gesendet und Daten werden nur verarbeitet bei authentisiertem Fahrer. Der Datenaustausch erfolgt Punkt zu Punkt. Der Sender ist in einem Stromsparmodus, der in Ausführungsbeispielen das vollständige Abschalten des Senders vorsieht.

Das C-V2X Modem ist in Ausführungsbeispielen vom Kontrollmodul 16 der Fig. 1 sowie dem C-V2X Modem 522 der Fig. 4 umfasst.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrens-schritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der hier beschriebenen Prinzipien dar. Es versteht sich, dass Modifikationen und Variationen der hierin beschriebenen Anordnungen und Einzelheiten anderen Fachleuten einleuchten werden. Deshalb ist beabsichtigt, dass der Schutzumfang der nachstehenden Patentansprüche relevant ist und nicht durch spezifische Einzelheiten, die anhand der Beschreibung und der Erläuterung der Ausführungsbeispiele hierin präsentiert wurden, beschränkt wird.

### BEZUGSZEICHENLISTE

- 10: Kommunikationsmodul
- 12: Sender
- 14: Empfänger
- 14: Kontrollmodul
- 20: Kontrollkomponente
- 22: Sender
- 24: Empfänger
- 24: Kontrollmodul
- 100: Fahrzeug
- 110: Überführen vom einen ersten Modus in einen zweiten Modus
- 120: Empfangen eines Mobilfunksignals
- 130: Authentifizieren eines Mobilfunkgerätes
- 200: Mobilstation
- 300: Verfahren für eine Kommunikationsmodul
- 310: Überführen vom einen ersten Modus in einen zweiten Modus
- 320: Empfangen eines Mobilfunksignals
- 330: Authentifizieren eines Mobilfunkgerätes
- 400: Verfahren für ein Mobilfunkgerät
- 410: Senden eines Signals
- 420: Empfangen eines Signals
- 500: Kommunikationseinrichtung
- 510: Sendeempfänger
- 512: SIM Karte
- 514: Display
- 516: externer Speicher
- 518: Anschlussmöglichkeit externer Geräte
- 520: Sicherheitselement
- 522: C-V2X Modem
- 524: 2. - 5. G Modem
- 526: Applikationsprozessor
- 528: Stromversorgung
- 530: Verbindungssystem
- 540: GPS Modul
- 550: Bluetooth Modul
- 560: WLAN Modul
- 600: C-V2X Modem Modus bewegtes Fahrzeug
- 610: Rundfunksignale austauschen
- 620: Re-Konfiguration
- 630: C-V2X Modem Modus abgestelltes Fahrzeug
- 640: Punkt zu Punkt Signalaustausch

## Patentansprüche

1. Kommunikationsmodul (10) zur Authentifizierung eines Mobilfunkgerätes (20) für eine standortspezifische Funktion eines Fahrzeugs (100), umfassend:
einen Sender (12), der zum Senden von Mobilfunksignalen in einem Mobilfunksystem ausgebildet ist;
einen Empfänger (14), der zum Empfangen von Mobilfunksignalen in einem Mobilfunksystem ausgebildet ist;
ein Kontrollmodul (16), das mit dem Sender (12) und dem Empfänger (14) gekoppelt ist und zur Kontrolle des Senders (12) und des Empfängers (14) ausgebildet ist, wobei das Kontrollmodul (16) bei einem abgestelltem Fahrzeug (100) ferner ausgebildet ist;
ein empfangenes Mobilfunksignal des Mobilfunkgerätes (20) auszuwerten, das Informationen über eine Identität des Mobilfunkgerätes (20) umfasst; ein Authentifizieren des Mobilfunkgerätes (20) basierend auf dem Mobilfunksignal durchzuführen, wobei das Mobilfunkgerät (20) nach erfolgreicher Authentifizierung zur Nutzung zumindest einer standortspezifischen Funktion des Fahrzeugs (100) berechtigt ist, **dadurch gekennzeichnet dass** der Sender (12) von einem ersten Modus in einen zweiten Modus überführt wird, wobei der Sender (12) in dem zweiten Modus weniger Energie konsumiert als in dem ersten Modus.

2. Kommunikationsmodul (10) nach Anspruch 1, wobei das Kontrollmodul (16) ausgebildet ist, um den Sender nach erfolgreicher Authentifizierung von dem zweiten Modus in den ersten Modus zu überführen.

3. Kommunikationsmodul (10) nach einem der vorherigen Ansprüche, wobei das Kontrollmodul (16) ausgebildet ist, um bei nicht abgestelltem Fahrzeug (100) fahrzeugspezifische und verkehrsspezifische Informationen anderer Entitäten auszuwerten und/oder die Aussendung entsprechender eigner Information zur veranlassen.

4. Kommunikationsmodul (10) nach Anspruch 3, wobei das Kontrollmodul (16) ausgebildet ist, um die fahrzeugspezifischen und verkehrsspezifischen Informationen nach dem Fahrzeug zu Entität -V2X- Standard zu senden und zu empfangen.

5. Kommunikationsmodul (10) nach einem der vorherigen Ansprüche, wobei das Kontrollmodul (16) ausgebildet ist, um bei nicht abgestelltem Fahrzeug (100) den Sender (12) von dem zweiten Modus in den ersten Modus zu überführen.

6. Kommunikationsmodul (10) nach einem der Ansprüche 1 bis 5, wobei das Kontrollmodul (16) ausgebildet ist, um vor der Ausführung einer standortspezifischen Funktion des Fahrzeugs (100) eine Entfernung zwischen Fahrzeug (100) und Mobilfunkgerät (20) zu ermitteln, und dass die standortspezifische Funktion des Fahrzeugs erst bei Unterschreiten einer vorgegebenen Entfernung zwischen Fahrzeug (100) und Mobilfunkgerät (20) gewährt wird.

7. Kommunikationsmodul (10) nach einem der vorherigen Ansprüche, wobei das Kontrollmodul (16) ausgebildet ist, um eine Punkt-zu-Punkt Übertragung für das Mobilfunksignal zwischen Kommunikationsmodul (10) und Mobilfunkgerät (20) zu verwenden.

8. Fahrzeug (100) umfassend ein Kommunikationsmodul (10) nach einem der Ansprüche 1-7.

9. Mobilfunkgerät (20), das ausgebildet ist zur Kommunikation mit einem Kommunikationsmodul (10) eines abgestellten Fahrzeugs (100), umfassend:
einen Sender (22), der zum Senden von Mobilfunksignalen in einem Mobilfunksystem ausgebildet ist;
einen Empfänger (24), der zum Empfangen von Mobilfunksignalen in einem Mobilfunksystem ausgebildet ist;
ein Kontrollmodul (26), das mit dem Sender (22) und dem Empfänger (24) gekoppelt ist und zur Kontrolle des Senders (22) und des Empfängers (24) ausgebildet ist, wobei das Kontrollmodul (26) ferner ausgebildet ist, zum
Empfangen eines Signals von dem Kommunikationsmodul (10) bei positiver Authentifizierung des Mobilfunkgerätes (20) mit Informationen zumindest einer standortspezifischen Funktion des Fahrzeugs (100);**dadurch gekennzeichnet, dass** ein Senden eines Punkt zu Punkt Signals an das Kommunikationsmodul (10) mit einer Information über eine Identität des Mobilfunkgerätes (20) erfolgt, wobei die Information über die Identität des Mobilfunkgerätes (20) zur Authentifizierung des Mobilfunkgerätes (20) durch das Kommunikationsmodul (10) vorgesehen ist;
wobei das Senden eine dem Fahrer zugeordnete Identifikation umfasst, die eine Authentifizierung des Fahrers ermöglicht.

10. Mobilfunkgerät (20) nach Anspruch 9, wobei das Kontrollmodul (26) ausgebildet ist, um den empfangenen Informationen zumindest einer standortspezifischen Funktion des Fahrzeugs (100) eine geografische Position des Fahrzeugs (100) zu entnehmen.

11. Mobilfunkgerät (20) nach einem der Ansprüche 9 oder 10, wobei das Kontrollmodul (26) ausgebildet ist, um den empfangenen Informationen zumindest einer standortspezifischen Funktion des Fahrzeugs ferner eine Aufforderung zur Übermittlung von Zugangsberechtigungsdaten an das Kommunikationsmodul zu entnehmen.

12. System umfassend ein Kommunikationsmodul (10) nach einem der Ansprüche 1-7 und einem Mobilfunkgerät (20) nach einem der Ansprüche 9 und 10.

13. Verfahren (300) für ein Kommunikationsmodul (10) zur Authentifizierung eines Mobilfunkgerätes (20) für eine standortspezifische Funktion eines abgestellten Fahrzeugs (100), umfassend die folgenden Schritte:
Empfangen (120, 320) eines Mobilfunksignals von dem Mobilfunkgerät (20), das Informationen über eine Identität des Mobilfunkgerätes (20) umfasst; und
Authentifizieren (130, 330) des Mobilfunkgerätes (20) auf Basis des Mobilfunksignals;
**dadurch gekennzeichnet, dass** ein Überführen (110, 310) eines Senders (12) des Kommunikationsmoduls (10) von einem ersten Modus in einen zweiten Modus erfolgt, wobei der Sender (12) in dem zweiten Modus weniger Energie konsumiert als in dem ersten Modus.

14. Verfahren (400) für ein Mobilfunkgerät (20), das ausgebildet ist zur Authentifizierung des Mobilfunkgerätes (20) in einem Kommunikationsmodul (10) für eine standortspezifische Funktion eines abgestellten Fahrzeugs (100), umfassend die folgenden Schritte:
Empfangen (420) eines Signals von dem Kommunikationsmodul (10) bei positiver Authentifizierung des Mobilfunkgerätes (20) mit Informationen zumindest einer standortspezifischen Funktion des abgestellten Fahrzeugs (100);
**dadurch gekennzeichnet, dass** ein Senden (120, 410) eines Punkt zu Punkt Signals an das Kommunikationsmodul (10) für das abgestellte Fahrzeug mit Informationen über eine Identität des Mobilfunkgerätes (20) erfolgt, wobei die Informationen über die Identität des Mobilfunkgerätes (20) zur Authentifizierung des Mobilfunkgerätes (20) durch das Kommunikationsmodul (10) vorgesehen ist;
wobei das Senden eine dem Fahrer zugeordnete Identifikation umfasst, die eine Authentifizierung des Fahrers ermöglicht.

15. Computerprogramm mit einem Programmcode zum Durchführen zumindest eines der Verfahren gemäß einem der Ansprüche 13 und 14, wenn der Programmcode auf einem Computer, einem Prozessor, einem Kontrollmodul oder einer programmierbaren Hardwarekomponente ausgeführt wird.

## Claims

1. Communication module (10) for authenticating a mobile radio device (20) for a location-specific function of a vehicle (100), comprising:
a transmitter (12) that is designed for transmitting mobile radio signals in a mobile radio system;
a receiver (14) that is designed for receiving mobile radio signals in a mobile radio system;
a control module (16) that is coupled with the transmitter (12) and the receiver (14) and is designed for controlling the transmitter (12) and the receiver (14), wherein the control module (16) is further designed, for a parked vehicle (100);
to evaluate a received mobile radio signal of the mobile radio device (20), which comprises information concerning an identity of the mobile radio device (20);
to carry out an authentication of the mobile radio device (20) based on the mobile radio signal, wherein the mobile radio device (20) is authorised, after successful authentication, to use at least one location-specific function of the vehicle (100),
**characterised in that** the transmitter (12) is transferred from a first mode into a second mode, wherein the transmitter (12) consumes less energy in the second mode than in the first mode.

2. Communication module (10) according to claim 1, wherein the control module (16) is designed in order to transfer the transmitter, after successful authentication, from the second mode into the first mode.

3. Communication module (10) according to any one of the preceding claims, wherein the control module (16) is designed in order, when the vehicle (100) is not parked, to evaluate vehicle-specific and traffic-specific information of other entities and/or to initiate the transmission of its own corresponding information.

4. Communication module (10) according to claim 3, wherein the control module (16) is designed in order to send and receive the vehicle-specific and traffic-specific information according to the vehicle-to-entity V2X standard.

5. Communication module (10) according to any one of the preceding claims, wherein the control module (16) is designed in order, when the vehicle (100) is not parked, to transfer the transmitter (12) from the second mode into the first mode.

6. Communication module (10) according to any one of claims 1 to 5, wherein the control module (16) is designed in order, before carrying out a location-specific function of the vehicle (100), to determine a distance between vehicle (100) and mobile radio device (20), and in that the location-specific function of the vehicle is only allowed when a distance between vehicle (100) and mobile radio device (20) falls below a specified limit.

7. Communication module (10) according to any one of the preceding claims, wherein the control module (16) is designed to use a point-to-point transfer for the mobile radio signal between communication module (10) and mobile radio device (20).

8. Vehicle (100) comprising a communication module (10) according to any one of claims 1-7.

9. Mobile radio device (20) that is designed for communicating with a communication module (10) of a parked vehicle (100), comprising:
a transmitter (22) that is designed for transmitting mobile radio signals in a mobile radio system;
a receiver (24) that is designed for receiving mobile radio signals in a mobile radio system;
a control module (26) that is coupled with the transmitter (22) and the receiver (24) and is designed for controlling the transmitter (22) and the receiver (24), wherein the control module (26) is further designed for
receiving a signal from the communication module (10) in the event of a positive authentication of the mobile radio device (20) with information about at least one location-specific function of the vehicle (100); **characterised in that** a point-to-point signal is transmitted to the communication module (10) with information concerning an identity of the mobile radio device (20), wherein the information concerning the identity of the mobile radio device (20) is provided for authentication of the mobile radio device (20) by the communication module (10);
wherein the transmission comprises an identification assigned to the driver, which enables an authentication of the driver.

10. Mobile radio device (20) according to claim 9, wherein the control module (26) is designed in order to extract a geographic position of the vehicle (100) from the information received from at least one location-specific function of the vehicle (100).

11. Mobile radio device (20) according to one of claims 9 or 10, wherein the control module (26) is designed in order to further extract a request for the forwarding of access authorisation data to the communication module from the information received from at least one location-specific function of the vehicle.

12. System comprising a communication module (10) according to any one of claims 1-7 and a mobile radio device (20) according to one of claims 9 and 10.

13. Method (300) for a communication module (10) for authenticating a mobile radio device (20) for a location-specific function of a parked vehicle (100), comprising the following steps:
receiving (120, 320) a mobile radio signal from the mobile radio device (20), which comprises information concerning an identity of the mobile radio device (20); and
authenticating (130, 330) the mobile radio device (20) on the basis of the mobile radio signal;
**characterised in that** a transfer (110, 310) takes place of a transmitter (12) of the communication module (10) from a first mode into a second mode, wherein the transmitter (12) consumes less energy in the second mode than in the first mode.

14. Method (400) for a mobile radio device (20) that is designed for authenticating the mobile radio device (20) in a communication module (10) for a location-specific function of a parked vehicle (100), comprising the following steps:
receiving (420) a signal from the communication module (10), on positive authentication of the mobile radio device (20), with information from at least one location-specific function of the parked vehicle (100);
**characterised in that** a transmission (120, 410) takes place of a point-to-point signal to the communication module (10) for the parked vehicle with information concerning an identity of the mobile radio device (20), wherein the information concerning the identity of the mobile radio device (20) is provided for authentication of the mobile radio device (20) by the communication module (10);
wherein the transmission comprises an identification assigned to the driver, which enables an authentication of the driver.

15. Computer program with a program code for carrying out at least one of the methods according to one of claims 13 and 14, when the program code is executed on a computer, a processor, a control module or a programmable hardware component.

## Revendications

1. Module de communication (10) pour authentifier un dispositif radio mobile (20) pour une fonction spécifique à l'emplacement d'un véhicule (100), comprenant :
un émetteur (12) qui est conçu pour émettre des signaux radio mobiles dans un système radio mobile ;
un récepteur (14) qui est conçu pour recevoir des signaux radio mobiles dans un système radio mobile ;
un module de commande (16) couplé à l'émetteur (12) et au récepteur (14) et conçu pour commander l'émetteur (12) et le récepteur (14), dans lequel le module de commande (16) est en outre conçu, lorsque le véhicule (100) est à l'arrêt, pour
évaluer un signal radio mobile reçu du dispositif radio mobile (20), qui comprend des informations sur une identité du dispositif radio mobile (20) ;
effectuer une authentification du dispositif radio mobile (20) sur la base du signal radio mobile, dans lequel le dispositif radio mobile (20) est autorisé à utiliser au moins une fonction spécifique à l'emplacement du véhicule (100) après une authentification réussie,
**caractérisé en ce que** l'émetteur (12) est passé d'un premier mode à un second mode, dans lequel l'émetteur (12) consomme moins d'énergie dans le second mode que dans le premier mode.

2. Module de communication (10) selon la revendication 1, dans lequel le module de commande (16) est conçu pour passer l'émetteur du second mode au premier mode après une authentification réussie.

3. Module de communication (10) selon l'une quelconque des revendications précédentes, dans lequel le module de commande (16) est conçu pour évaluer des informations spécifiques au véhicule et à la circulation d'autres entités lorsque le véhicule (100) n'est pas à l'arrêt et/ou pour ordonner l'émission d'informations correspondantes qui lui sont propres.

4. Module de communication (10) selon la revendication 3, dans lequel le module de commande (16) est conçu pour émettre et recevoir les informations spécifiques au véhicule et à la circulation selon la norme véhicule à entité -V2X-.

5. Module de communication (10) selon l'une quelconque des revendications précédentes, dans lequel le module de commande (16) est conçu pour faire passer l'émetteur (12) du second mode au premier mode lorsque le véhicule (100) n'est pas à l'arrêt.

6. Module de communication (10) selon l'une quelconque des revendications 1 à 5, dans lequel le module de commande (16) est conçu pour déterminer une distance entre le véhicule (100) et le dispositif radio mobile (20) avant d'exécuter une fonction de spécifique au véhicule (100), et en ce que la fonction spécifique au véhicule n'est accordée que lorsque la distance entre le véhicule (100) et le dispositif radio mobile (20) est inférieure à une distance prédéterminée.

7. Module de communication (10) selon l'une quelconque des revendications précédentes, dans lequel le module de commande (16) est conçu pour utiliser une transmission point à point pour le signal radio mobile entre le module de communication (10) et le dispositif radio mobile (20).

8. Véhicule (100) comprenant un module de communication (10) selon l'une quelconque des revendications 1-7.

9. Dispositif radio mobile (20) qui est conçu pour communiquer avec un module de communication (10) d'un véhicule à l'arrêt (100), comprenant :
un émetteur (22) qui est conçu pour émettre des signaux radio mobiles dans un système radio mobile ;
un récepteur (24) qui est conçu pour recevoir des signaux radio mobiles dans un système radio mobile ;
un module de commande (26) couplé à l'émetteur (22) et au récepteur (24) et conçu pour commander l'émetteur (22) et le récepteur (24), dans lequel le module de commande (26) est en outre conçu pour
recevoir un signal du module de communication (10) lors d'une authentification positive du dispositif radio mobile (20) avec des informations au moins d'une fonction spécifique à l'emplacement du véhicule (100) ; **caractérisé en ce que** l'émission d'un signal point à point au module de communication (10) est effectuée avec des informations sur une identité du dispositif radio mobile (20), dans lequel les informations sur l'identité du dispositif radio mobile (20) sont prévues pour l'authentification du dispositif radio mobile (20) par le module de communication (10) ;
dans lequel l'émission comprend une identification associée au conducteur, qui permet l'authentification du conducteur.

10. Dispositif radio mobile (20) selon la revendication 9, dans lequel le module de commande (26) est conçu pour extraire une position géographique du véhicule (100) à partir des informations reçues au moins d'une fonction spécifique à l'emplacement du véhicule (100).

11. Dispositif radio mobile (20) selon l'une quelconque des revendications 9 ou 10, dans lequel le module de commande (26) est conçu pour extraire en outre, à partir des informations reçues au moins d'une fonction spécifique à l'emplacement du véhicule, une demande de transmission de données d'autorisation d'accès au module de communication.

12. Système comprenant un module de communication (10) selon l'une quelconque des revendications 1-7 et un dispositif radio mobile (20) selon l'une quelconque des revendications 9 et 10.

13. Procédé (300) pour un module de communication (10) pour authentifier un dispositif radio mobile (20) pour une fonction spécifique à l'emplacement d'un véhicule à l'arrêt (100), comprenant les étapes suivantes :
réception (120, 320) d'un signal radio mobile du dispositif radio mobile (20), qui comprend des informations sur une identité du dispositif radio mobile (20) ; et
authentification (130, 330) du dispositif radio mobile (20) sur la base du signal radio mobile ;
**caractérisé en ce que** le passage (110, 310) d'un émetteur (12) du module de communication (10) d'un premier mode à un second mode est effectué, dans lequel l'émetteur (12) consomme moins d'énergie dans le second mode que dans le premier mode.

14. Procédé (400) pour un dispositif radio mobile (20), qui est conçu pour authentifier le dispositif radio mobile (20) dans un module de communication (10) pour une fonction spécifique à l'emplacement d'un véhicule à l'arrêt (100), comprenant les étapes suivantes :
réception (420) d'un signal du module de communication (10) lors de l'authentification positive du dispositif radio mobile (20) avec des informations au moins d'une fonction spécifique à l'emplacement du véhicule à l'arrêt (100) ;
**caractérisé en ce que** l'émission (120, 410) d'un signal point à point au module de communication (10) pour le véhicule à l'arrêt avec des informations sur une identité du dispositif radio mobile (20), dans lequel les informations sur l'identité du dispositif radio mobile (20) sont prévues pour l'authentification du dispositif radio mobile (20) par le module de communication (10) ;
dans lequel l'émission comprend une identification associée au conducteur, qui permet l'authentification du conducteur.

15. Programme informatique avec un code de programme pour exécuter au moins un des procédés selon l'une quelconque des revendications 13 et 14, lorsque le code de programme est exécuté sur un ordinateur, un processeur, un module de commande ou un composant matériel programmable.
